# EUROPEAN PATENT SPECIFICATION

(11) **EP 3 385 613 B1**
(45) Date of publication and mention of the grant of the patent: **22.09.2021**
(21) Application number: 16869979.1
(22) Date of filing: 30.11.2016
(51) Int. Cl.: F21V 29/65, G03B 21/16, G02B 26/00, F21V 29/502, G03B 33/08, F21V 9/30, H04N 9/31

(54) **COLOUR WHEEL DEVICE**
FARBRADVORRICHTUNG
DISPOSITIF DE ROUE CHROMATIQUE

(30) Priority: 02.12.2015 CN 201510875143; 07.06.2016 CN 201610398000
(43) Date of publication of application: 10.10.2018
(73) Proprietor: Appotronics Corporation Limited, Shenzhen (CN)
(72) Inventor: HU, Fei, Shenzhen Guangdong 518055 (CN); TAN, Dazhi, Shenzhen Guangdong 518055 (CN); LI, Yi, Shenzhen Guangdong 518055 (CN)
(74) Representative: Hoffmann Eitle
(86) International application number: PCT/CN2016/107956
(87) International publication number: WO 2017/092669

(56) References cited:
- CN-A- 103 807 810
- CN-A- 103 807 810
- CN-A- 104 661 005
- CN-A- 104 676 492
- CN-A- 104 676 492
- CN-U- 202 065 853
- CN-U- 203 365 896
- US-A1- 2012 013 854

## Description

### BACKGROUND

### Technical Field

This application relates to a color wheel apparatus, and in particular, to a high-power phosphor color wheel apparatus.

### Related Art

Color wheel apparatuses are widely applied to fields such as laser source lighting, projection, optical phototypesetting, and optical storage. For example, in a 3DLP (Digital Light Processing) laser projection apparatus, a laser generated by a laser source is used to excite a phosphor color wheel to generate white light. As output optical power of the laser source increases, thermal power consumption of the phosphor color wheel rises accordingly. The light-emitting efficiency of phosphor under excitation decreases as the temperature rises. When the temperature exceeds a critical point, the efficiency decreases rapidly. Therefore, if a heat dissipation problem of a color wheel is not adequately solved, the normal use of the projection apparatus is adversely affected.

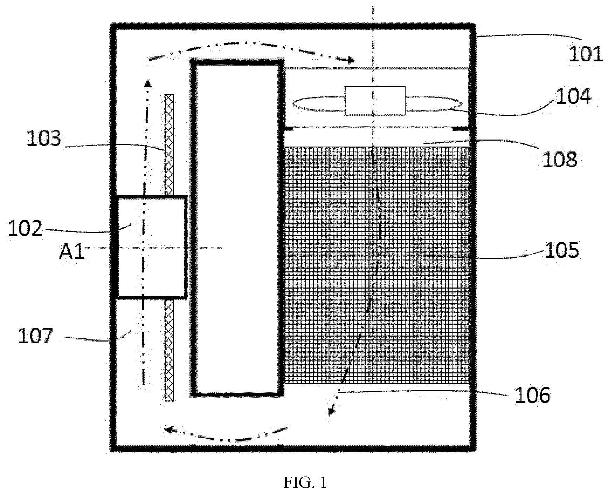

A heat dissipation apparatus for the phosphor color wheel in the conventional 3DLP laser projection apparatus is shown in FIG. 1. The heat dissipation apparatus includes a sealed cavity 101 assembled by using a plurality of structural members. An internal air duct is formed in the sealed cavity 101. An air direction is shown by an arrow 106 or may be an opposite direction. A color wheel 103 is mounted on a motor 102. The motor 102 is fixed on an inner wall surface of the sealed cavity 101. The motor 102 drives a shaft A1 to rotate to actuate the color wheel 103 to rotate, so that air in a color wheel cavity 107 flows to exchange heat with outside. The heated air is driven by a fan 104 to enter a heat exchanger cavity 108, is cooled in a heat exchanger 105, and then returns to the color wheel cavity 107 along the air duct, so as to complete an absorption and release cycle of heat. Therefore, a circulation air duct used for heat dissipation in the phosphor color wheel in the conventional 3DLP laser projection apparatus has a relatively large air resistance, and a fan with a large air volume and high back pressure needs to be used to drive an air flow to circulate. Moreover, the fan is disposed outside the color wheel cavity 107, heat generated when the color wheel 101 works cannot be removed in time, and consequently the working efficiency of the color wheel 101 is adversely affected.

Other examples of the prior art can be seen in documents CN 103 807 810 A and CN 104 676 492 A.

### SUMMARY

This application provides an improved color wheel apparatus.

According to a first aspect of this application, this application provides a color wheel apparatus, including the features of claim 1.

In the color wheel apparatus of the present invention, the color wheel module includes amongst other things:
a heat dissipation plate, the wavelength conversion layer being disposed on an end face of a light receiving surface of the heat dissipation plate;
a plurality of fan blades, disposed on an end face, facing away from the light receiving surface of the heat dissipation plate; and
a drive apparatus, fixed on the sealed housing, a rotational axis of the drive apparatus being connected to the heat dissipation plate and actuating the heat dissipation plate and the plurality of fan blades to rotate synchronously.

The beneficial effect of this application is as follows: an air flow is sucked into a color wheel cavity through an air inlet, absorbs heat thoroughly in the color wheel cavity, and is then thrown out through an air outlet. The air flow that is thrown out is thoroughly cooled in a heat exchanger and is then sucked into the color wheel cavity again. That is, a complete circulation air duct used for heat dissipation is formed in a color wheel apparatus, and a driving force in the circulation air duct is directly implemented by using a color wheel module in the color wheel cavity, so as to enable the color wheel module in the color wheel apparatus to thoroughly exchange heat with the air flow in the circulation air duct, so that heat generated when the color wheel module works can be removed in time, thereby improving the working efficiency of the color wheel module, and extending the service life of the color wheel apparatus.

### BRIEF DESCRIPTION OF THE DRAWINGS

FIG. 1 is a schematic structural diagram of a heat dissipation apparatus for a phosphor color wheel in a conventional 3DLP laser projection apparatus;
FIG. 2 is a schematic structural diagram of a color wheel apparatus in an embodiment of this application;
FIG. 3 is a schematic structural diagram of a color wheel module in FIG. 2;
FIG. 4A is an assembled schematic diagram of a color wheel cavity in FIG. 1;
FIG. 4B is a schematic exploded diagram of the color wheel cavity in FIG. 1;
FIG. 5 is a schematic structural diagram of a color wheel apparatus in another embodiment of this application;
FIG. 6 is an assembled schematic diagram of a color wheel cavity in FIG. 5;
FIG. 7 is a schematic structural diagram of a color wheel apparatus in still another embodiment of this application; and
FIG. 8 is a schematic structural diagram of a heat exchanger in FIG. 7.

Where:
20, wavelength conversion layer;
21, sealed housing;
22, color wheel cavity; 221, air inlet; 222, air outlet;
23, circulation air duct; 231, first air duct; 232, second air duct;
24, color wheel module; 241, heat dissipation plate; 242, fan blade; 243, drive apparatus; 244, substrate; 245, cover body;
25, heat exchanger; 251, heat exchange inlet; and 252, heat exchange outlet.

### DETAILED DESCRIPTION

This application is further described below in detail by using specific implementations with reference to the accompanying drawings.

FIG. 1 to FIG. 8 show a color wheel apparatus in the present invention. The color wheel apparatus is mainly used in a 3DLP laser projection apparatus. It may be understood that the color wheel apparatus may further be used in light-emitting apparatuses in other conventional lighting systems or projection systems.

### Embodiment 1:

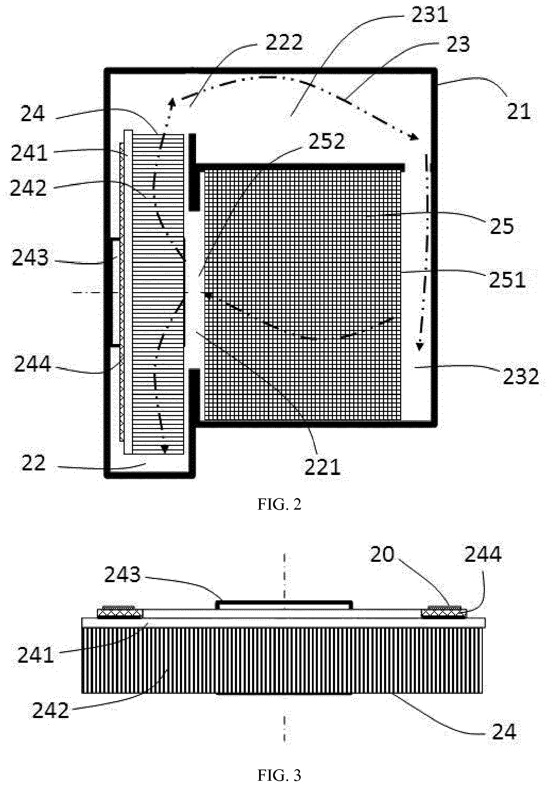

Referring to FIG. 2 and FIG. 3, the color wheel apparatus includes a wavelength conversion layer 20, a sealed housing 21, a color wheel module 24, and a heat exchanger 25.

The wavelength conversion layer 20 is mainly used to absorb excitation light and generate excited light. The wavelength conversion layer 20 includes a wavelength conversion material. The most common wavelength conversion material is fluorescent powder, for example, yttrium aluminum garnet (YAG) fluorescent powder that can absorb blue light and be excited to generate yellow excited light. The wavelength conversion material may further be a material such as a quantum-dot or fluorescent material that has wavelength conversion capability, and is not limited to fluorescent powder. In most cases, the wavelength conversion material usually has a powder form or particle form, and it is difficult to directly form a wavelength conversion material layer. In this case, an adhesive needs to be used to fix particles of the wavelength conversion material together and form a specific shape such as a sheet shape.

A main effect of the sealed housing 21 is to provide a sealed cavity isolated from outside for the wavelength conversion layer 20, the color wheel module 24, and a heat dissipation device such as the heat exchanger 25. That is, a color wheel cavity 22 is formed in the sealed housing 21. The color wheel cavity 22 includes an air inlet 221 and an air outlet 222. The air inlet 221 is generally located at a first position of the color wheel cavity 22. The first position is facing the wavelength conversion layer 20. The air outlet 222 is generally located at a second position of the color wheel cavity 22. The second position is parallel to an air inlet direction of the air inlet 221. As shown in FIG. 2, the air inlet 221 in this embodiment may be located at a central portion of the color wheel cavity. The air outlet 222 may be located at an edge of the color wheel cavity 22. In this embodiment of the present invention, the wavelength conversion layer 20 and the color wheel module 24 are accommodated in the color wheel cavity 22. The heat exchanger 25 is disposed outside the color wheel cavity 22. The sealed housing 21 may be joined by using a plurality of structural members, or may be formed as one piece by using an injection molding process.

The color wheel module 24 is disposed in the color wheel cavity 22. The color wheel module 24 is mainly used to enable air outside the color wheel cavity 22 to enter the color wheel cavity 22 through the air inlet 221 and then leaves the color wheel cavity 22 through the air outlet 222, so as to form a circulation air duct 23 in which an air flow passes through the air inlet 221 of the color wheel cavity 22, the air outlet 222, a heat exchange inlet 251, and a heat exchange outlet 252 and then reaches the air inlet 221.

Specifically, referring to FIG. 3, the color wheel module 24 may include a heat dissipation plate 241, a plurality of fan blades 242, and a drive apparatus 243. A conventional micro motor, micro engine or the like may usually be used for the drive apparatus 243. The plurality of fan blades 242 are preferably formed with the heat dissipation plate 241 as one piece. The wavelength conversion layer 20 is disposed on a light receiving surface of the heat dissipation plate 241. The plurality of fan blades 242 are disposed on an end face facing away from the light receiving surface of the heat dissipation plate 241. The drive apparatus 243 is fixed on the sealed housing 21. A rotational axis of the drive apparatus 243 is connected to the heat dissipation plate 241 and actuates the heat dissipation plate 241 and the plurality of fan blades 242 to rotate synchronously. The heat dissipation plate 241 and the fan blades 242 are both made of a high-thermal-conductivity material such as aluminum or copper, or may further be made of a ceramic material such as aluminum nitride ceramic, silicon carbide ceramic, and aluminum oxide ceramic. In the process, the heat dissipation plate 241 and the fan blades 242 may be formed as one piece. The wavelength conversion layer 20 is directly coated and sintered on the heat dissipation plate 241. Moreover, heat generated by the wavelength conversion layer 20 under laser irradiation is transferred to the heat dissipation plate 241 and the fan blades 242 through thermal conduction, so that a heat exchange area of convective heat dissipation is greatly increased.

When the drive apparatus 243 rotates at a high speed, the color wheel module 24 is equivalent to a centrifugal fan. Air is sucked into the color wheel cavity 22 through the air inlet 221 and is accelerated and pressurized under the effect of the color wheel module 24. The air exchanges heat with the heat dissipation plate 241 and the fan blades 242 in the color wheel cavity 22 and is heated, and is then blown out from the color wheel cavity 22 through the air outlet 222 under the effect of the color wheel module 24, so as to remove the heat generated by the wavelength conversion layer 20 under laser irradiation in the color wheel cavity 22.

Furthermore, a substrate 244 may further be disposed between the wavelength conversion layer 20 and the heat dissipation plate 241. An end face, facing away from a light receiving surface of the substrate 244 is bonded or welded to the heat dissipation plate 241. The wavelength conversion layer 20 is disposed on the light receiving surface of the substrate 244. The substrate 244 is mainly used to support the wavelength conversion layer 20 and reflect generated excited light. In fact, if technically feasible, provided that the heat dissipation plate 241 can meet a reflection requirement, it is a preferred implementation solution in this embodiment that the wavelength conversion layer 20 is directly coated and sintered on the heat dissipation plate 241. That is, under the premise that the reflectivity of the heat dissipation plate 241 can satisfy a requirement, there is preferably no need for the additional substrate 244 used to support the wavelength conversion layer 20.

Furthermore, the plurality of fan blades 242 extend in a radial direction of the heat dissipation plate 241. The plurality of fan blades 242 are uniformly distributed in an annular shape. The fan blades 242 can effectively increase a heat exchange area of the heat dissipation plate 241, and the heat transferred to the heat dissipation plate 241 dissipates more rapidly into air inside the color wheel cavity 22, thereby improving the heat exchange efficiency inside the color wheel cavity 22, improving the heat dissipation effect, further reducing the temperature of the wavelength conversion layer 20, improving the reliability of the color wheel module 24, and extending the service life.

The fan blades 242 may extend linearly in the radial direction of the heat dissipation plate 241. However, in such an arrangement, air resistance is increased during the rotation of the heat dissipation plate 241. As a result, a larger driving force is needed to drive the drive apparatus 243 of the heat dissipation plate 241.

To reduce air resistance, the fan blades 242 preferably extend in an arc-shaped form in a radial direction of the substrate 244, so as to effectively reduce a driving force used to drive the substrate 244 to rotate.

The heat exchanger 25 is disposed in the sealed housing 21 and is located outside the color wheel cavity 22. The heat exchanger 25 includes the heat exchange inlet 251 and the heat exchange outlet 252. The heat exchange inlet 251 is connected to the air outlet 222. The heat exchange outlet 252 is connected to the air inlet 221. A hot air flow thrown out through the air outlet 222 of the color wheel cavity 22 passes the heat exchange inlet 251 to enter the heat exchanger 25, and exchanges heat with a refrigerant in the heat exchanger 25. The cooled air flow is sucked into the color wheel cavity 22 again through the heat exchange outlet 252 and the air inlet 221.

It should be noted that the air flow is sucked by the color wheel module 24 into the color wheel cavity 22 to cool the wavelength conversion layer, and is then thrown out from the color wheel cavity 22. The heat exchanger 25 is circumferentially close to the sealed housing 21 and a baffle. Therefore, the air flow enters the heat exchanger 25 through the air outlet 222 and the heat exchange inlet 251 to perform heat exchange, and the air flow after the heat exchange can only be sucked into the color wheel cavity 22 through the heat exchange outlet 252 and the air inlet 221.

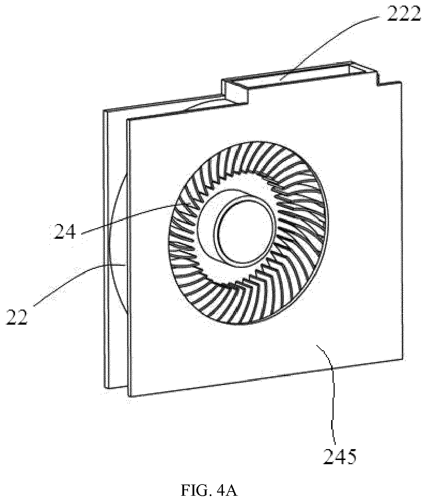

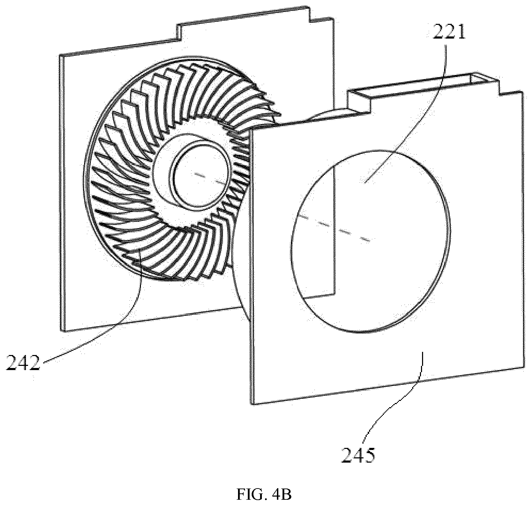

Referring to FIG. 4A and FIG. 4B, the color wheel module 24 further includes a cover body 245. The cover body 245 is located between the wavelength conversion layer 20 and the heat exchanger 25. An outer edge of the cover body 245 is fixedly connected to the sealed housing 21. The cover body 245 separates the color wheel module 24 from the heat exchanger 25 and forms the color wheel cavity 22 together with the sealed housing 21. A first opening is provided at a central portion of the cover body 245. One or more second openings are provided at an edge of the cover body 245. The first opening is facing to a central axis portion of the heat dissipation plate 241 to form the air inlet. The second opening forms the air outlet. That is, the air inlet 221 of the color wheel cavity 22 corresponds to a central position of the heat dissipation plate 241. Only one air outlet 222 of the color wheel cavity 22 is disposed, and is disposed in a radial direction of the wavelength conversion layer. It may be understood that the air outlet 222 in this embodiment is preferably disposed perpendicularly to a plane in which the heat dissipation plate 241 is located. With such a design, the air flow that is thrown out by the fan blades 242 in a radial direction of the fan blades 242 directly and straightly passes through the air outlet 222 to flow to the heat exchanger 25, so that the air pressure is high at the air outlet 222 of the color wheel cavity 22, so as to form a relatively high flow speed.

Preferably, the shape of the first opening at the central portion of the cover body 245 is preferably circular. That is, the shape of the air inlet 221 of the color wheel cavity 22 is circular, and the center of circle of the air inlet 221 is on a rotation axis of the heat dissipation plate 241. The diameter of the air inlet 221 is less than the diameter of the heat dissipation plate 241. A small part of the high-speed air flow thrown out by the fan blades 242 is blocked by the heat dissipation plate 241 at an edge of the heat dissipation plate 241 and moves in an axial direction of the heat dissipation plate 241, forming turbulence. The turbulence of the part is blocked by the cover body 245 disposed in the axial direction at the edge of the heat dissipation plate 241, and the turbulence is carried in a large part of the air flow that moves in the radial direction of the heat dissipation plate 241 and is discharged through the air outlet 222 of the color wheel cavity 22. In this way, the effect of eliminating turbulence is achieved, and turbulence that has not undergone heat exchange is prevented from flowing back to the heat exchanger 25 or from interfering with the air flow that flows out from the heat exchange outlet 252 of the heat exchanger 25, so that the problem that the entire circulation air duct 23 becomes unstable is avoided.

Furthermore, in this embodiment, the heat exchanger 25 is fixed on an inner wall of the sealed housing 21 or on the cover body 245. The heat exchange outlet 252 and the heat exchange inlet 251 of the heat exchanger 25 are respectively disposed on the outer side surfaces of the heat exchanger 25 which are facing to each other. The heat exchange outlet 252 is near the air inlet 221. Directions restricted by the heat exchange inlet 251 and the heat exchange outlet 252 are consistent in the axial direction of the heat dissipation plate 241. The heat exchange outlet 252 abuts the air inlet 221. Correspondingly, the circulation air duct 23 further includes a first air duct 231 extending in a width direction of the sealed housing 21 and a second air duct 232 extending in a height direction of the sealed housing 21.

In this embodiment, the heat exchanger 25 is mainly an air-to-liquid heat exchanger, or may further be an air-to-air heat exchanger in another embodiment of this application. That is, a heat dissipation fin is disposed on a surface of the heat exchanger 25. An end portion of the heat dissipation fin passes through the sealed housing 21 to stretch outside, and an external forced convection device is then used to remove heat from a surface of the heat dissipation fin, so as to achieve the effect of reducing the temperature.

### Embodiment 2:

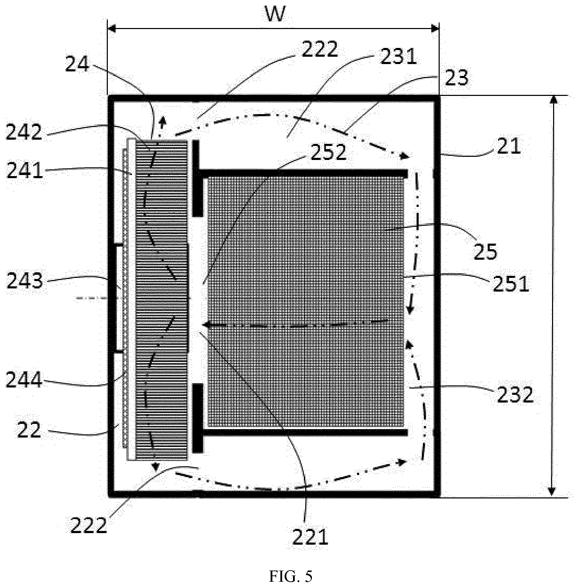

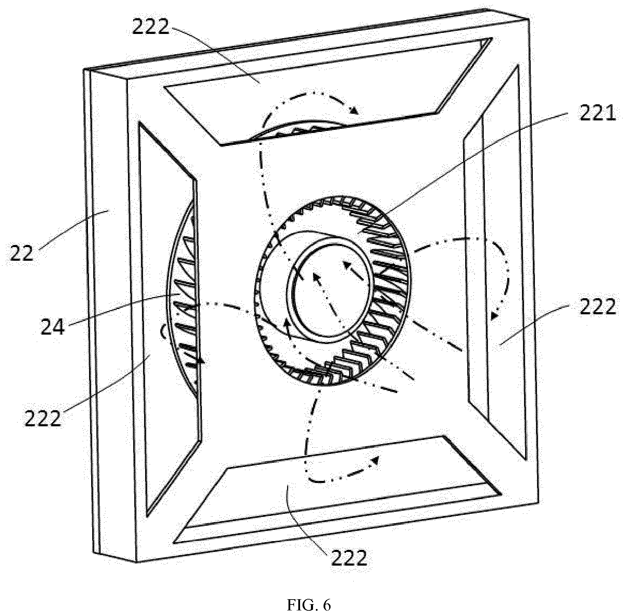

Referring to FIG. 5 and FIG. 6, a color wheel apparatus provided in this embodiment has an overall structure and basic functions that are same as or similar to those of the color wheel apparatus provided in Embodiment 1, and details are no longer described here. Only differences between the two embodiments are described below.

In this embodiment, an air inlet 221 of a color wheel cavity 22 is similarly facing to a central position of a heat dissipation plate 241, and a plurality of air outlets 222 of the color wheel cavity 22 are disposed. Generally, the air outlets 222 in this embodiment may be uniformly distributed in an outer circumferential direction of the heat dissipation plate 241. In this way, the benefit of the design lies in that the air outlets 222 of the color wheel cavity 22 have a large area and a relatively large air volume.

Furthermore, in this embodiment, a heat exchange inlet 251 of a heat exchanger 25 is similarly disposed on an outer side surface, far away from the air inlet 221 of the heat exchanger 25. A heat exchange outlet 252 of the heat exchanger 25 is similarly disposed on an outer side surface near the air inlet 221 of the heat exchanger 25. Correspondingly, a circulation air duct 23 includes a first air duct 231 extending in a width direction of the sealed housing 21 and a second air duct 232 extending in a height direction of the sealed housing 21. However, in Embodiment 1, the circulation air duct 23 includes at least one first air duct 231, whereas in this embodiment, the circulation air duct 23 includes at least two first air ducts 231.

### Embodiment 3:

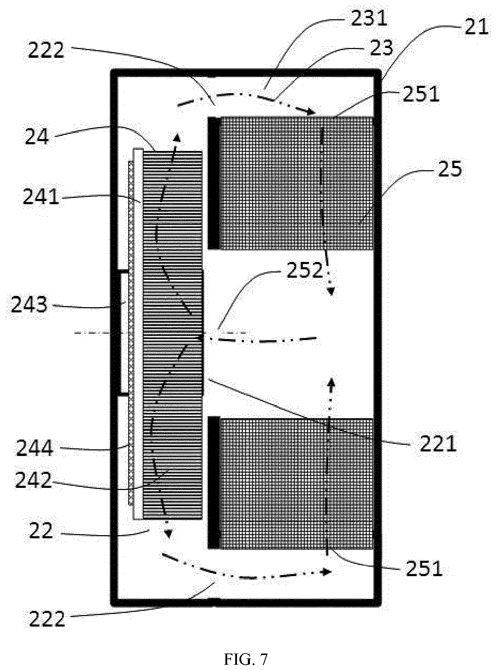

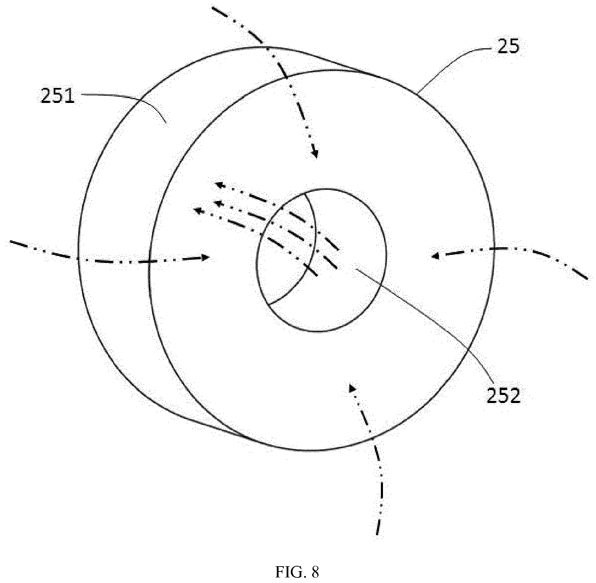

Referring to FIG. 7 and FIG. 8, a color wheel apparatus provided in this embodiment has an overall structure and basic functions that are same as or similar to those of the color wheel apparatus provided in Embodiment 2, and details are no longer described here. Only differences between the two embodiments are described below.

In this embodiment, the structure of a heat exchanger 25 is changed. The heat exchanger 25 may be a hollowed rectangle, or may be an annular heat exchanger 25 shown in FIG. 8. That is, an annular opening may be provided at a central portion of the heat exchanger 25. In this case, a heat exchange inlet 251 and a heat exchange outlet 252 of the heat exchanger 25 are disposed differently. The details are as follows:
The heat exchange outlet 252 of the heat exchanger 25 is disposed on an outer side surface near an air inlet 221 of the annular opening. For example, the annular opening is disposed at a central portion of the heat exchanger 25. In this case, the position at which the heat exchange outlet 252 of the heat exchanger 25 is disposed may be kept consistent with the position at which the heat exchange outlet 252 in Embodiment 2 is disposed. That is, the heat exchange outlet 252 corresponds to an axial direction of the annular opening. The heat exchange outlet 252 is disposed on an outer side surface near the air inlet 221 of the heat exchanger 25. A plurality of heat exchange inlets 251 of the heat exchanger 25 may be disposed. Generally, the heat exchange inlets 251 may be uniformly distributed in an outer circumferential direction of the annular opening. When the heat exchanger 25 is an annular heat exchanger 25, the heat exchange inlets 251 may be uniformly distributed in an outer circumferential direction of the annular heat exchanger 25.

In addition, because the heat exchange inlets 251 are uniformly distributed in an outer circumferential direction of the annular heat exchanger 25, an end of the heat exchanger 25 may be attached to an inner side wall of a sealed housing 21, so that a circulation air duct 23 only includes a first air duct 231 extending in a width direction of the sealed housing 21. In this way, the benefit of the design lies in that the color wheel apparatus has a smaller size in a width direction, so that the overall size of the color wheel apparatus in this embodiment becomes smaller.

Furthermore, there may be two heat exchangers 25. The two heat exchangers 25 are respectively disposed isolated from each other on two sides of the air inlet 221. The heat exchange inlets 251 of the two heat exchangers 25 are disposed opposite.

The foregoing content is further detailed description of this application made with reference to specific implementations, and it cannot be construed that the specific implementations of this application are limited to these descriptions only. A person of ordinary skill in the technical field of this application can further make several simple derivations or replacements without departing from the inventive concept of this application as defined by the appended claims.

## Claims

1. A color wheel apparatus, comprising a wavelength conversion layer (20), a sealed housing (21), a cover body (245), a heat exchanger (25) and a color wheel module (24), wherein:
the wavelength conversion layer (20) is configured to be illuminated by excitation light and to generate excited light;
the sealed housing (21) is configured to form a sealed cavity and to accommodate the wavelength conversion layer (20), the cover body (245), the heat exchanger (25) and the color wheel module (24) in the sealed cavity;
the cover body (245) has an outer edge fixedly connected to the sealed housing (21), wherein the cover body (245) together with the sealed housing (21) form a color wheel cavity (22) for accommodating the wavelength conversion layer (20) and the color wheel module (24), wherein a first opening is provided at a central portion of the cover body, one or more second openings are provided at an edge of the cover body, the first opening forms an air inlet (221) of the color wheel cavity (22), and the second openings form an air outlet (222) of the color wheel cavity (22);
the heat exchanger (25) is located outside the color wheel cavity (22), wherein the heat exchanger (25) comprises a heat exchange inlet (251) and a heat exchange outlet (252); and
the color wheel module (24) is disposed in the color wheel cavity (22), supporting the wavelength conversion layer (20), and configured to provide power for enabling an air flow to enter through the air inlet (221) of the color wheel cavity (22) and leave through the air outlet (222), so as to form a circulation air duct in which the air flow sequentially passes through the air inlet (221) of the color wheel cavity (22), the color wheel module (24), the air outlet (222) of the color wheel cavity (22), the heat exchange inlet (251), and the heat exchange outlet (252) and then returns to the air inlet (221).

2. The color wheel apparatus according to claim 1, wherein the color wheel module comprises a heat dissipation plate (241) and the wavelength conversion layer (20) is disposed on an end face of a light receiving surface of the heat dissipation plate (241) of the color wheel module (24), and the color wheel module (24) further comprises:
a plurality of fan blades (242), disposed on an end face, facing away from the light receiving surface of the heat dissipation plate (241); and
a drive apparatus (243), fixed on the sealed housing (21), a rotational axis of the drive apparatus (243) being connected to the heat dissipation plate (241) and actuating the heat dissipation plate (241), the wavelength conversion layer (20), and the plurality of fan blades (242) to rotate synchronously.

3. The color wheel apparatus according to claim 2, wherein a substrate is further disposed between the wavelength conversion layer (20) and the heat dissipation plate (241), an end face facing away from a light receiving surface of the substrate is bonded or welded to the heat dissipation plate (241), and the wavelength conversion layer (20) is disposed on an end face of the light receiving surface of the substrate.

4. The color wheel apparatus according to claim 2, wherein the plurality of fan blades (242) extend in a radial direction of the heat dissipation plate (241), and the plurality of fan blades (242) are uniformly distributed in an annular shape.

5. The color wheel apparatus according to claim 2, wherein the plurality of fan blades (242) are formed with the heat dissipation plate (241) as one piece.

6. The color wheel apparatus according to any of claims 2 to 5, wherein the heat dissipation plate (241) is made of a metal material.

7. The color wheel apparatus according to any of claims 2 to 5, wherein the heat dissipation plate (241) is manufactured of a ceramic material, and the wavelength conversion layer (20) is fixedly disposed on a surface of the heat dissipation plate (241) through sintering.

8. The color wheel apparatus according to any of claims 2 to 5, wherein a heat dissipation fin is further disposed on a surface of the heat exchanger (25), and the heat dissipation fin extends through the sealed housing (21) to extend outside.

9. The color wheel apparatus according to claim 1, wherein the shape of the first opening is circular, the shape of the heat dissipation plate (241) is circular, and the diameter of the first opening is less than the diameter of the heat dissipation plate (241).

10. The color wheel apparatus according to claim 1, wherein the heat exchanger (25) is fixed on an inner wall of the sealed housing (21) or on the cover body, the heat exchange outlet (252) of the heat exchanger (25) and the heat exchange inlet (251) are respectively disposed on two outer side surfaces of the heat exchanger (25) which are opposite to each other, and the heat exchange outlet (252) is near the air inlet (221).

11. The color wheel apparatus according to claim 10, wherein directions restricted by the heat exchange inlet (251) and the heat exchange outlet (252) are consistent in an axial direction of the heat dissipation plate (241), and the heat exchange outlet (252) abuts the air inlet (221).

12. The color wheel apparatus according to claim 11, wherein there are two heat exchangers (25), the two heat exchangers (25) are respectively disposed isolated from each other on two sides of the air inlet (221), and the heat exchange inlets (251) of the two heat exchangers (25) are disposed opposite.

13. The color wheel apparatus according to claim 1, wherein the heat exchange outlet (252) is facing to the air inlet (221).

14. The color wheel apparatus according to claim 1, wherein an end of the heat exchanger (25) is attached to an inner side wall of the sealed housing (21) and an annular opening can be provided at a central portion of the heat exchanger (25), the heat exchange outlet (252) is disposed on an outer side surface near an air inlet (221) of the annular opening.

15. The color wheel apparatus according to claim 13, wherein the heat exchanger (25) is an annular heat exchanger, a plurality of heat exchange inlets (251) are uniformly distributed in an outer circumferential direction of the annular opening.

## Patentansprüche

1. Farbradeinrichtung, die eine Wellenlängenumwandlungsschicht (20), ein abgedichtetes Gehäuse (21) einen Abdeckkörper (245), einen Wärmetauscher (25) und ein Farbradmodul (24) umfasst, wobei:
die Wellenlängenumwandlungsschicht (20) konfiguriert ist, um von Erregungslicht beleuchtet zu sein und erregtes Licht zu erzeugen;
das abgedichtete Gehäuse (21) dazu konfiguriert ist, einen abgedichteten Hohlraum zu bilden und die Wellenlängenumwandlungsschicht (20), den Abdeckkörper (245), den Wärmetauscher (25) und das Farbradmodul (24) in dem abgedichteten Hohlraum aufzunehmen;
der Abdeckkörper (245) eine Außenkante aufweist, die fest mit dem abgedichteten Gehäuse verbunden ist, wobei der Abdeckkörper (245) gemeinsam mit dem abgedichteten Gehäuse (21) einen Farbradhohlraum (22) zum Aufnehmen der Wellenlängenumwandlungsschicht (20) und des Farbradmoduls (24) bildet, wobei eine erste Öffnung an einem zentralen Abschnitt des Abdeckkörpers bereitgestellt ist, eine oder mehrere zweite Öffnungen an einer Kante des Abdeckkörpers bereitgestellt sind, die erste Öffnung einen Lufteinlass (221) des Farbradhohlraums (22) bildet, und die zweiten Öffnungen einen Luftauslass (222) des Farbradhohlraums (22) bilden;
der Wärmetauscher (25) außerhalb des Farbradhohlraums (22) liegt, wobei der Wärmetauscher (25) einen Wärmetauschereinlass (251) und einen Wärmetauscherauslass (252) umfasst; und
das Farbradmodul (24) in dem Farbradhohlraum (22) angeordnet ist, die Wellenlängenumwandlungsschicht (20) trägt und dazu konfiguriert ist, Leistung bereitzustellen, um das Eintreten eines Luftstroms durch den Lufteinlass (221) des Farbradhohlraums (22) und Austreten durch den Luftauslass (222) derart zu ermöglichen, dass eine Zirkulationsluftleitung gebildet wird, in der der Luftstrom nacheinander durch den Lufteinlass (221) des Farbradhohlraums (22), das Farbradmodul (24), den Luftauslass (222) des Farbradhohlraums (22), den Wärmetauschereinlass (251) und den Wärmetauscherauslass (252) durchgeht und dann zu dem Lufteinlass (221) zurückkehrt.

2. Farbradeinrichtung nach Anspruch 1, wobei das Farbradmodul eine Wärmeverteilungsplatte (241) umfasst, und die Wellenlängenumwandlungsschicht (20) auf einer Endfläche einer Lichtempfangsoberfläche der Wärmeverteilungsplatte (241) des Farbradmoduls (24) angeordnet ist, und das Farbradmodul (24) weiter umfasst:
eine Vielzahl von Gebläseflügeln (242), die auf einer Endfläche angeordnet sind, die von der Lichtempfangsoberfläche der Wärmeverteilungsplatte (241) abgewandt ist; und
eine Antriebseinrichtung (243), die auf dem abgedichteten Gehäuse (21) befestigt ist, wobei eine Rotationsachse der Antriebseinrichtung (243) mit der Wärmeverteilungsplatte (241) verbunden ist und die Wärmeverteilungsplatte (241), die Wellenlängenumwandlungsschicht (20) und die Vielzahl von Gebläseflügeln (242) betätigt, so dass sie sich synchron drehen.

3. Farbradeinrichtung nach Anspruch 2, wobei ein Substrat weiter zwischen der Wellenlängenumwandlungsschicht (20) und der Wärmeverteilungsplatte (241) angeordnet ist, eine Endfläche, die von einer Lichtempfangsoberfläche des Substrats abgewandt ist, an die Wärmeverteilungsplatte (241) geklebt oder geschweißt ist, und die Wellenlängenumwandlungsschicht (20) auf einer Endfläche der Lichtempfangsoberfläche des Substrats angeordnet ist.

4. Farbradeinrichtung nach Anspruch 2, wobei sich die Vielzahl von Gebläseflügeln (242) in eine radiale Richtung der Wärmeverteilungsplatte (241) erstreckt, und die Vielzahl von Gebläseflügeln (242) gleichmäßig in einer winkeligen Form verteilt ist.

5. Farbradeinrichtung nach Anspruch 2, wobei die Vielzahl von Gebläseflügeln (242) mit der Wärmeverteilungsplatte (241) als ein Stück gebildet ist.

6. Farbradeinrichtung nach einem der Ansprüche 2 bis 5, wobei die Wärmeverteilungsplatte (241) aus einem Metallmaterial hergestellt ist.

7. Farbradeinrichtung nach einem der Ansprüche 2 bis 5, wobei die Wärmeverteilungsplatte (241) aus einem Keramikmaterial hergestellt ist, und die Wellenlängenumwandlungsschicht (20) fest auf einer Oberfläche der Wärmeverteilungsplatte (241) durch Sintern angeordnet ist.

8. Farbradeinrichtung nach einem der Ansprüche 2 bis 5, wobei eine Wärmeverteilungsrippe weiter auf einer Oberfläche des Wärmetauschers (25) angeordnet ist, und sich die Wärmeverteilungsrippe durch das abgedichtete Gehäuse (21) erstreckt, um sich nach außen zu erstrecken.

9. Farbradeinrichtung nach Anspruch 1, wobei die Form der ersten Öffnung kreisförmig ist, die Form der Wärmeverteilungsplatte (241) kreisförmig ist, und der Durchmesser der ersten Öffnung kleiner ist als der Durchmesser der Wärmeverteilungsplatte (241).

10. Farbradeinrichtung nach Anspruch 1, wobei der Wärmetauscher (25) auf einer Innenwand des abgedichteten Gehäuses (21) oder auf dem Abdeckkörper befestigt ist, wobei der Wärmetauscherauslass (252) des Wärmetauschers (25) und der Wärmetauschereinlass (251) jeweils auf zwei äußeren Seitenoberflächen des Wärmetauschers (25), die einander entgegengesetzt sind, angeordnet sind, und der Wärmetauscherauslass (252) nahe des Lufteinlasses (221) liegt.

11. Farbradeinrichtung nach Anspruch 10, wobei Richtungen, die von dem Wärmetauschereinlass (251) und dem Wärmetauscherauslass (252) eingeschränkt sind, in eine axiale Richtung der Wärmeverteilungsplatte (241) übereinstimmen, und der Wärmetauscherauslass (252) an den Lufteinlass (221) anstößt.

12. Farbradeinrichtung nach Anspruch 11, wobei zwei Wärmetauscher (25) vorliegen, wobei die zwei Wärmetauscher (25) jeweils voneinander isoliert auf zwei Seiten des Lufteinlasses (221) angeordnet sind, und die Wärmetauschereinlässe (251) der zwei Wärmetauscher (25) entgegengesetzt angeordnet sind.

13. Farbradeinrichtung nach Anspruch 1, wobei der Wärmetauscherauslass (252) dem Lufteinlass (221) zugewandt ist.

14. Farbradeinrichtung nach Anspruch 1, wobei ein Ende des Wärmetauschers (25) an einer Innenseitenwand des abgedichteten Gehäuses (21) angebracht ist, und eine ringförmige Öffnung an einem zentralen Abschnitt des Wärmetauschers (25) bereitgestellt werden kann, wobei der Wärmetauscherauslass (252) auf einer äußeren Seitenoberflächen nahe eines Lufteinlasses (221) der ringförmigen Öffnung angeordnet ist.

15. Farbradeinrichtung nach Anspruch 13, wobei der Wärmetauscher (25) ein ringförmiger Wärmetauscher ist, eine Vielzahl von Wärmetauschereinlässen (251) gleichmäßig in eine äußere Umfangsrichtung der ringförmigen Öffnung verteilt ist.

## Revendications

1. Appareil de roue chromatique, comprenant une couche de conversion de longueur d'onde (20), un boitier d'étanchéité (21), un corps de couvercle (245), un échangeur de chaleur (25) et un module de roue chromatique (24), dans lequel :
la couche de conversion de longueur d'onde (20) est configurée pour être éclairée par une lumière d'excitation et pour générer une lumière excitée ;
le boîtier d'étanchéité (21) est configuré pour former une cavité étanche et pour loger la couche de conversion de longueur d'onde (20), le corps de couvercle (245), l'échangeur de chaleur (25) et le module de roue chromatique (24) dans la cavité étanche;
le corps de couvercle (245) présente un bord externe relié de manière fixe au boîtier d'étanchéité (21), dans lequel le corps de couvercle (245) conjointement avec le boîtier d'étanchéité (21) forment une cavité de roue chromatique (22) pour loger la couche de conversion de longueur d'onde (20) et le module de roue chromatique (24), dans lequel une première ouverture est prévue au niveau d'une partie centrale du corps de couvercle, une ou plusieurs secondes ouvertures sont prévues au niveau d'un bord du corps de couvercle, la première ouverture forme une entrée d'air (221) de la cavité de roue chromatique (22), et les secondes ouvertures forment une sortie d'air (222) de la cavité de roue chromatique (22) ;
l'échangeur de chaleur (25) est situé à l'extérieur de la cavité de roue chromatique (22), dans lequel l'échangeur de chaleur (25) comprend une entrée d'échange de chaleur (251) et une sortie d'échange de chaleur (252) ; et
le module de roue chromatique (24) est disposé dans la cavité de roue chromatique (22), supportant la couche de conversion de longueur d'onde (20), et configuré pour fournir de l'énergie pour permettre à un flux d'air d'entrer à travers l'entrée d'air (221) de la cavité de roue chromatique (22) et de sortir à travers la sortie d'air (222), de manière à former un conduit d'air de circulation dans lequel le flux d'air passe séquentiellement à travers l'entrée d'air (221) de la cavité de roue chromatique (22), le module de roue chromatique (24), la sortie d'air (222) de la cavité de roue chromatique (22), l'entrée d'échange de chaleur (251), et la sortie d'échange de chaleur (252), puis revient à l'entrée d'air (221).

2. Appareil de roue chromatique selon la revendication 1, dans lequel le module de roue chromatique comprend une plaque de dissipation de chaleur (241) et la couche de conversion de longueur d'onde (20) est disposée sur une face d'extrémité d'une surface de réception de lumière de la plaque de dissipation de chaleur (241) du module de roue chromatique (24), et le module de roue chromatique (24) comprend en outre :
une pluralité de pales de ventilateur (242), disposées sur une face d'extrémité, orientées à l'opposé de la surface de réception de lumière de la plaque de dissipation de chaleur (241) ; et
un appareil d'entraînement (243), fixé sur le boîtier d'étanchéité (21), un axe de rotation de l'appareil d'entraînement (243) étant relié à la plaque de dissipation de chaleur (241) et actionnant la plaque de dissipation de chaleur (241), la couche de conversion de longueur d'onde (20), et la pluralité de pales de ventilateur (242) pour tourner de manière synchrone.

3. Appareil de roue chromatique selon la revendication 2, dans lequel un substrat est en outre disposé entre la couche de conversion de longueur d'onde (20) et la plaque de dissipation de chaleur (241), une face d'extrémité orientée à l'opposé d'une surface de réception de lumière du substrat est liée ou soudée à la plaque de dissipation de chaleur (241), et la couche de conversion de longueur d'onde (20) est disposée sur une face d'extrémité de la surface de réception de lumière du substrat.

4. Appareil de roue chromatique selon la revendication 2, dans lequel la pluralité de pales de ventilateur (242) s'étendent dans une direction radiale de la plaque de dissipation de chaleur (241), et la pluralité de pales de ventilateur (242) sont réparties uniformément selon une forme annulaire.

5. Appareil de roue chromatique selon la revendication 2, dans lequel la pluralité de pales de ventilateur (242) sont formées d'un seul tenant avec la plaque de dissipation de chaleur (241).

6. Appareil de roue chromatique selon l'une quelconque des revendications 2 à 5, dans lequel la plaque de dissipation de chaleur (241) est faite d'un matériau métallique.

7. Appareil de roue chromatique selon l'une quelconque des revendications 2 à 5, dans lequel la plaque de dissipation de chaleur (241) est fabriquée à partir d'un matériau de céramique, et la couche de conversion de longueur d'onde (20) est disposée de manière fixe sur une surface de la plaque de dissipation de chaleur (241) par frittage.

8. Appareil de roue chromatique selon l'une quelconque des revendications 2 à 5, dans lequel une ailette de dissipation de chaleur est en outre disposée sur une surface de l'échangeur de chaleur (25), et l'ailette de dissipation de chaleur s'étend à travers le boîtier d'étanchéité (21) pour s'étendre à l'extérieur.

9. Appareil de roue chromatique selon la revendication 1, dans lequel la forme de la première ouverture est circulaire, la forme de la plaque de dissipation de chaleur (241) est circulaire, et le diamètre de la première ouverture est inférieur au diamètre de la plaque de dissipation de chaleur (241).

10. Appareil de roue chromatique selon la revendication 1, dans lequel l'échangeur de chaleur (25) est fixé sur une paroi intérieure du boîtier d'étanchéité (21) ou sur le corps de couvercle, la sortie d'échange de chaleur (252) de l'échangeur de chaleur (25) et l'entrée d'échange de chaleur (251) sont respectivement disposées sur deux surfaces latérales extérieures de l'échangeur de chaleur (25) qui sont opposées l'une à l'autre, et la sortie d'échange de chaleur (252) est à proximité de l'entrée d'air (221).

11. Appareil de roue chromatique selon la revendication 10, dans lequel des directions restreintes par l'entrée d'échange de chaleur (251) et la sortie d'échange de chaleur (252) sont cohérentes dans une direction axiale de la plaque de dissipation de chaleur (241), et la sortie d'échange de chaleur (252) jouxte l'entrée d'air (221).

12. Dispositif de roue chromatiques selon la revendication 11, dans lequel il y a deux échangeurs de chaleur (25), les deux échangeurs de chaleur (25) sont respectivement disposés isolés l'un de l'autre sur deux côtés de l'entrée d'air (221), et les entrées d'échange de chaleur (251) des deux échangeurs de chaleur (25) sont disposées se faisant face.

13. Appareil de roue chromatique selon la revendication 1, dans lequel la sortie d'échange de chaleur (252) fait face à l'entrée d'air (221).

14. Appareil de roue chromatique selon la revendication 1, dans lequel une extrémité de l'échangeur de chaleur (25) est fixée à une paroi latérale interne du boîtier d'étanchéité (21) et une ouverture annulaire peut être prévue au niveau d'une partie centrale de l'échangeur de chaleur (25), la sortie d'échange de chaleur (252) est disposée sur une surface latérale externe près d'une entrée d'air (221) de l'ouverture annulaire.

15. Appareil de roue chromatique selon la revendication 13, dans lequel l'échangeur de chaleur (25) est un échangeur de chaleur annulaire, une pluralité d'entrées d'échange de chaleur (251) sont réparties uniformément dans une direction circonférentielle extérieure de l'ouverture annulaire.
